Europäisches Patentamt

European Patent Office

Office européen des brevets

(19)

(11) Publication number : **0 520 775 A1**

# (12) EUROPEAN PATENT APPLICATION

(21) Application number : 92305815.0

(22) Date of filing : 24.06.92

(51) Int. Cl.$^5$ : **C08L 5/00**

(30) Priority : **28.06.91 US 722639**

(43) Date of publication of application :
**30.12.92 Bulletin 92/53**

(84) Designated Contracting States :
**AT BE CH DE DK ES FR GB GR IT LI LU NL PT SE**

(71) Applicant : **MERCK & CO. INC.**
**126, East Lincoln Avenue P.O. Box 2000**
**Rahway New Jersey 07065-0900 (US)**

(72) Inventor : **Talashek, Todd**
**9950 Scripps Westview 71**
**San Diego, CA 92131 (US)**
Inventor : **Baird, John K.**
**6206 Lakewood Street**
**San Diego, CA 92122 (US)**

(74) Representative : **Thompson, John Dr. et al**
**Merck & Co., Inc. European Patent**
**Department Terlings Park Eastwick Road**
**Harlow, Essex CM20 2QR (GB)**

(54) Solution of welan gum in ethylene glycol.

(57) An ethylene glycol composition which includes welan gum, an alkaline sequestrant or alkali, e.g. trisodium phosphate, and ethylene glycol. The alkaline sequestrant or alkali enhances solubility of welan gum in ethylene glycol and thereby increases the viscosity and thixotropic properites of the ethylene glycol composition.

EP 0 520 775 A1

## BACKGROUND OF THE INVENTION

The invention relates to ethylene glycol compositions which include welan gum, and the enhancement of welan gum solubility in ethylene glycol.

One specific application of ethylene glycol compositions containing welan gum is as an insulation material, such as the material described in United States Serial No. 07/643,872, corresponding to European application no. 92300293.5.

The transportation of oil obtained from offshore fields requires specially designed systems for conveyance of the oil. Typically, oil temperature is about 220°-250°F and the temperature of the water through which the oil must be conveyed can be as low as 32°-50°F. Any system for conveying oil through such a low temperature environment must provide a suitable means for insulating the oil from the low temperature.

The insulation composition of the present invention provides efficient thermal insulation which is convenient to use in instances where extruded foams and insulation wrappings are either difficult or impossible to use.

The insulation capacity of the composition is such that either longer sea bed lines or slower production rates through shorter lines is possible while end line minimum oil temperatures are maintained.

Jansson et al., Carbohydrate Research 139 (1985) 217-223 describes the primary structure of the welan gum polysaccharide. The pentasaccharide repeating unit of welan gum comprises glucose, rhamnose and mannose units in relative proportions 43:46:11.

Crescenzi et al., Carbohydrate Research 149 (1986) 425-432 describes the behavior of welan gum in dilute aqueous solutions.

Crescenzi et al., Carbohydrate Research 160 (1987) 283-302 describes the influence of side-chain sugars on the dilute-solution properties of three anionic bacterial polysaccharides, including welan gum.

United States Serial No. 07/643,872, corresponding to European application no. 92300293.5, describes thixotropic compositions which serve as insulating material comprising ethylene glycol and glycol-compatible welan gum. The welan gum described in that patent application as suitable for preparing insulating material is prepared according to the procedure described by Kang et al. US 4,342,866, including fermentation, broth treatment with sodium hypochlorite and calcium propionate, and precipitation, drying and milling. Preferred glycol-compatible welan gum is prepared by modifying the process so that sodium sulfate or potassium sulfate is added after fermentation and prior to precipitation.

It is a purpose of the present invention to provide a thixotropic, viscosified glycol composition which serves as an insulating material using welan gum prepared according to the procedure described in Kang et al. 4,342,866 without requiring the sodium sulfate or potassium sulfate addition following fermentation.

## SUMMARY OF THE INVENTION

The invention is an insulating material comprising ethylene glycol, welan gum and the alkaline sequestrants, e.g. trisodium phosphate, sodium hexametaphosphate or EDTA, alkalis, e.g. sodium hydroxide, potassium hydroxide, ammonium hydroxide, sodium carbonate, potassium carbonate, ammonium carbonate, sodium bicarbonate, potassium bicarbonate or ammonium bicarbonate, or combinations of these alkaline sequestrants and alkalis. Preferably, the ethylene glycol composition includes trisodium phosphate as the alkaline sequestrant or alkali. The presence of the alkaline sequestrant and/or alkali enhances the solubility of welan gum in ethylene glycol, and in combination with welan gum increases ethylene glycol viscosity to provide a thixotropic material which is a pumpable fluid under shear stress and a semisolid when under non-shear conditions. The presence of the alkaline sequestrants and/or alkali, by enhancing the solubility of welan gum, minimizes the formation of swollen insolubles and increases the dissolution of welan gum in ethylene glycol to form smooth, thixotropic compositions. The alkaline sequestrant binds divalent and trivalent cations under alkaline conditions. This effectively reduces ionic crosslinking between welan molecules, thereby improving welan solubility in ethylene glycol.

## DETAILED DESCRIPTION OF THE INVENTION

Hydration of welan gum in ethylene glycol in combination with the alkaline sequestrant and/or alkali is completed after mixing for a period of time followed by standing at room temperature. The rate of hydration is increased with the use of heat or when the ethylene glycol is mixed with increasing amounts of water.

Hydration in pure ethylene glycol is completed after 4 hours of mixing and 18 hours of standing at room temperature. In pure cold water, complete hydration is achieved in about one hour or less.

Welan gum to be added to ethylene glycol is dry blended with the alkaline sequestrant and/or alkali. The amount of the alkaline sequestrant and/or alkali added is between about 1% and 20%, more preferably about 5% and 15%, and even more preferably about 10%, weight based on total weight of welan gum.

The ethylene glycol compositions of the present invention have a viscosity much greater than pure ethylene glycol, and consistantly significantly higher than many ethylene glycol/welan gum combinations. Thus, addition of an alkaline sequestrant and/or alkali reduces viscosity variability of ethylene glycol/welan gum combinations and increases final viscosities.

Welan gum useful in compositions of the present invention is prepared according to the procedure described in Kang et al., US 4,342,866. After fermentation, the broth is treated with sodium hypochlorite and calcium propionate followed by precipitation, drying, and milling.

Strains used to produce welan gum

A species of Alcaligenes, ATCC 31555, or similar mutant species, is used to prepare welan gum. ATCC 31555 is a gram-negative aerobic rod-shaped bacterium.

Welan gum is produced during the aerobic fermentation of suitable aqueous nutrient media under controlled conditions via inoculation with the organism of the unnamed Alcaligenes species. The media contain sources of carbon, nitrogen and inorganic salts. Specific details of fermentation media and fermentation conditions are given in rang et al., US 4,342,866.

Typically, following fermentation, the beer is pasteurized at 167°F for 10-15 minutes, and good fibers are produced by precipitation with isopropanol at a final 58-60% concentration. Product is recovered after drying at 50-55°C for about one hour in a forced-air tray dryer and milled through an 80 mesh screen.

Ethylene glycol insulating compositions of the present invention were prepared by general procedure of dry blending welan gum with the alkaline sequestrant and/or alkali and combining the blend with ethylene glycol in a blender, e.g. Oster blender, stirring at 10,000 rpm for 20 minutes.

Viscosity measurements were conducted by testing a 0.25% w/w mix of welan gum/alkaline sequestrant and/or alkali blend in ethylene glycol at 6 rpm with a Brookfield LVT.

EXAMPLES 1-29

Compositions were prepared and viscosity tested. Compositions included ethylene glycol, 0.25% welan gum/trisodium phosphate blend which comprises 0, 5 or 10% trisodium phosphate based upon weight of the dry blend.

## Table 1
## Viscosity (cP)

| Example | Welan gum | Welan gum + 5% TSP | Welan gum + 10% TSP |
|---|---|---|---|
| 1 | 200 | 2390 | 2960 |
| 2 | 270 | 2700 | 2920 |
| 3 | 080 | 2370 | 2620 |
| 4 | 2340 | 2810 | 2790 |
| 5 | 1210 | 2990 | 2990 |

## Table 1 (Cont'd)
### Viscosity (cP)

| Example | Welan gum | Welan gum + 5% TSP | Welan gum + 10% TSP |
|---|---|---|---|
| 6 | 1670 | 2090 | 1940 |
| 7 | 1500 | 2100 | 1950 |
| 8 | 540 | 2560 | 2970 |
| 9 | 110 | 1390 | 2840 |
| 10 | 960 | 3040 | 2970 |
| 11 | 350 | 1820 | 2170 |
| 12 | 230 | – | 2640 |
| 13 | 1160 | – | 2340 |
| 14 | 55 | – | 2450 |
| 15 | 60 | – | 1500 |
| 16 | 50 | – | 2320 |
| 17 | 100 | – | 3020 |
| 18 | 230 | – | 2640 |
| 19 | 1200 | – | 2580 |
| 20 | 1160 | – | 2340 |
| 21 | 55 | – | 2450 |
| 22 | 45 | – | 2820 |
| 23 | 105 | – | 1970 |
| 24 | 60 | – | 1500 |
| 25 | 50 | – | 2320 |
| 26 | 160 | – | 1660 |
| 27 | 1350 | – | 1940 |
| 28 | 2370 | – | 2940 |
| 29 | 1950 | – | 2690 |

EXAMPLE 30

A composition of the present invention, containing ethylene glycol and 0.25% welan gum, containing 10% trisodium phosphate based upon weight of the blend was prepared and viscosity measured and compared to viscosity of compositions containing 0.25% welan gum and 10% of either EDTA, potassium hydroxide, sodium carbonate, ammonium bicarbonate, ammonium chloride, tricalcium phosphate, calcium hydroxide or sodium borate based upon the weight of the welan gum blend. Viscosity results indicate improved welan solubility in ethylene glycol for samples dry blended with an alkaline sequestrant (trisodium phosphate, EDTA) or alkali (potassium hydroxide, sodium carbonate, ammonium bicarbonate).

| Salt | Viscosity |
|------|-----------|
| (no salt) | 114 |
| Trisodium phosphate | 2910 |
| EDTA | 2750 |
| Potassium hydroxide | 1280 |
| Sodium carbonate | 680 |
| Ammonium bicarbonate | 370 |
| Ammonium chloride | 135 |
| Tricalcium phosphate | 120 |
| Calcium hydroxide | 55 |
| Sodium borate | 50 |

The thixotropic compositions of the present invention offer advantageous flow properties as well as insulating capability.

In a quiescent state, thixotropic compositions act as Bingham plastics. When subjected to shear stresses, however, thixotropic compositions fluidize. Dpon cessation of the applied shear stress, thixotropic compositions revert to the highly viscous/Bingham plastic state.

Optionally, a metal sequestrant is present in an amount sufficient for minimizing deleterious effects caused by the presence of metal ions.

Preferably, compositions of the present invention comprise weight ratios of glycol:welan gum of between 100:1 and 300:1, more preferably 150:1 and 250:1, even more preferably 175:1 and 225:1 and even more preferably 180:1 and 220:1. Most preferably, the weight ratio of glycol:welan gum is about 195:1. These compositions further comprise weight ratios of welan gum:alkaline sequestrant and/or alkali of between 99:1 and 5:1, more preferably 20:1 and 17:3, and even more preferably 9:1.

More preferably, the alkaline sequestrant and/or alkali is trisodium phosphate.

The subject fluid for which the above described system is especially useful is oil obtained from undersea oil wells. Such oil, naturally having a temperature greater than that of the sea, is insulated from the lower sea temperature and retains its naturally elevated temperature as it flows through the fluid pipe.

## Claims

1. A thixotropic composition comprising ethylene glycol, welan gum and alkaline sequestrant and/or alkali, wherein the ratio of welan gum to alkaline sequestrant and/or alkali is between about 99:1 and 5:1, and the ratio of ethylene glycol to welan gum is between about 100:1 and 300:1.

2. A composition of Claim 1 wherein the ratio of welan gum to alkaline sequestrant and/or alkali is between about 20:1 and 17:3.

3. A composition of Claim 2 wherein the ratio of welan gum to alkaline sequestrant and/or alkali is about 9:1.

4. A composition of Claim 1 wherein the alkaline sequestrant is trisodium phosphate, sodium hexametaphosphate or EDTA, and the alkali is sodium hydroxide, potassium hydroxide, ammonium hydroxide, sodium carbonate, potassium carbonate, ammonium carbonate, sodium bicarbonate, potassium bicarbonate, ammonium bicarbonate.

5. A composition of Claim 4 wherein the alkaline sequestrant is trisodium phosphate.

6. A composition of Claim 1 which has a viscosity greater then about 2,500 cP, when measured at 6 rpm with a Brookfield LVT.

**European Patent Office**

**EUROPEAN SEARCH REPORT**

Application Number

EP 92 30 5815

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 467 635 (LAND & MARINE ENGINEERING LIMITED)<br>* page 1, line 1 - line 3 *<br>* page 1, line 45 - line 50 *<br>* page 3, line 3 - line 6 *<br>* page 3, line 31 - line 39 *<br>* page 4, line 1 - line 6 *<br>* page 5, line 12 - line 16 *<br>* claims * | 1-6 | C08L5/00 |
| A | EP-A-0 202 935 (MOBIL OIL CORPORATION)<br>* page 6, line 18 - page 7, line 32 * | 1 | |
| A | EP-A-0 130 689 (MERCK & CO. INC.)<br>* page 1, line 11 - line 14 *<br>* page 2, line 12 - line 15 *<br>* page 3, line 1 - line 5; example 1 * | 1 | |
| | | | TECHNICAL FIELDS SEARCHED (Int. Cl.5) |
| | | | C08L<br>C12P<br>E21B<br>F16L |

The present search report has been drawn up for all claims

| Place of search | Date of completion of the search | Examiner |
|---|---|---|
| THE HAGUE | 07 OCTOBER 1992 | MAZET J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P0401)